# EUROPEAN PATENT SPECIFICATION

(11) **EP 2 064 035 B1**
(45) Date of publication and mention of the grant of the patent: **25.05.2011**
(21) Application number: 07735005.6
(22) Date of filing: 09.07.2007
(51) Int. Cl.: B27M 3/04, E04F 15/02, E04F 15/04, F16B 5/00

(54) **METHOD FOR MANUFACTURING FLOOR PANELS**
VERFAHREN ZUR HERSTELLUNG VON FUSSBODENPANEELEN
PROCÉDÉ DE FABRICATION DE PANNEAUX DE PLANCHER

(30) Priority: 19.07.2006 BE 200600399
(43) Date of publication of application: 03.06.2009
(73) Proprietor: Flooring Industries Limited, SARL, 8070 Bertrange (LU)
(72) Inventor: CAPPELLE, Mark, 8840 Staden (BE)
(74) Representative: Donné, Eddy
(86) International application number: PCT/IB2007/002001
(87) International publication number: WO 2008/010060

(56) References cited:
- EP-A- 1 640 530
- WO-A-01/96688
- US-A- 6 006 486
- US-A1- 2002 007 609
- US-A1- 2002 020 127

## Description

This invention relates to a method for manufacturing floor panels.

More particularly, the invention relates to a method for manufacturing floor panels which are intended for forming a floating floor covering and which, during installation, can be coupled to each other at their edges by means of mechanical coupling parts, whether or not made in one piece with the floor panel, said coupling parts providing in a mutual locking of the floor panels in horizontal as well as in vertical directions, for example, as described in the international patent applications WO 97/47834, WO 01/98603 and WO 01/96688.

As is evident from WO 97/47834, the contour of such coupling parts may be formed by means of a machining treatment with at least two milling tools. From WO 01/96688, it is known that, by providing a chamfer at the upper edge of the floor panels, it is possible to form such coupling parts for thin as well as for thick floor panels with similar cutting tools. However, the method disclosed in WO 01/96688 solely relates to a shifting in height of the overall contour of the coupling parts and does not allow that this contour as such is optimized according to the thickness of the floor panel.

The present invention relates to a more efficient and/or more economical manufacturing method for series of floor panels of different thickness, wherein indeed an optimization of the contour of the coupling parts, as intended above, may be achieved. To this aim, the invention relates to a method for manufacturing floor panels, of the type having coupling parts at least at two opposite sides, which coupling parts, when two of such floor panels cooperate with each other, effect a locking in vertical direction, perpendicularly to the plane of the floor panels, as well as a locking in horizontal direction, perpendicularly to the respective sides and in the plane of the floor panels, wherein the locking in vertical direction is realized by means of a tongue and groove connection, wherein this groove is bordered by a lower and an upper lip, and wherein the coupling parts, for performing the locking in horizontal direction, are provided with locking portions in the form of a recess in said lower lip and a cooperating-therewith projection at the underside of the tongue, which, when two of such floor panels cooperate, form at least horizontally active locking surfaces, wherein the locking surface formed on the flanks of said recess is situated at least partially in a portion of the lower lip that extends beyond the upper lip, wherein the method comprises at least the step of forming the coupling part having said groove, wherein the contour of this coupling part is composed at least of two portions, namely a first portion extending at least from said locking surface of the recess up to a rising flank portion of the recess, and a second portion extending at least from the underside of said upper lip up to the upper side of said lower lip, with the characteristic that the method is applied for manufacturing at least two series of floor panels, wherein the floor panels in a first series differ from the floor panels in a second series at least in that they have a different thickness; that said two portions of the contour of the coupling part having said groove as such are made identical in both series of floor panels; and that at least said first portion of the contour in said second series of floor panels is realized at a relative position in respect to the upper edge of the floor panel which is at least shifted laterally in respect to its position in said first series of floor panels.

By the fact that said first portion extends at least from said locking surface of the recess up to a rising flank portion of the recess is meant that this first portion forms at least a portion of the locking surface itself, as well as comprises at least a portion of said rising flank portion. In an analogous manner, it is valid that by the fact that the second portion extends at least from the underside of said upper lip up to the upper side of said lower lip, in this second portion at least portions of said upper side and lower side are comprised.

Composing contours of a coupling part of a floor panel in said manner leads to an efficient design of coupling parts, which can be applied in series of floor panels of different thickness, and which still may be optimized according to the thickness of the floor panels of the respective series.

With the intention of increasing the design and optimization possibilities, said second portion of the contour of the coupling part having said groove in said second series of floor panels preferably is realized at a relative position in respect to the upper side of the floor panel, which, in respect to its position in said first series of floor panels, is shifted at least in a direction transversely to the panel surface.

Preferably, said second portion extends at least up to a flank portion at the upper side of the lower lip, wherein this flank portion, globally viewed, extends under a smaller angle of inclination than the angle of inclination of the steepest portion of said rising flank portion of the recess, and wherein, still better, the prolongation of said first-mentioned flank portion adjoins to the prolongation of said rising flank portion of the recess, which forms a part of said first portion of the contour of the coupling part having the groove. It is clear that such method allows composing the contour of the respective coupling part from a limited number of portions only. At the location of said adjoining, the contour preferably has an abrupt change in the angle of inclination. Such adjoining provides for that the position of the first portion can be chosen largely independent from the position of the second portion, and such method thus may also lead to a larger number of possible contours, which are composed by means of at least said two portions.

In order to limit the number of composing portions of the contour of the coupling part having the groove, it is preferred that the aforementioned first portion of the contour also comprises the distal extremity of said lower lip and/or that the aforementioned second portion of the contour comprises at least the entire upper side of the upper lip.

Preferably, the method of the present invention is applied for manufacturing floor panels of a first and a second series, the aforementioned tongue and groove of which, both two floor panels of the first series and when two floor panels of the second series cooperate with each other, show at least vertically active locking surfaces at the underside of the upper lip and at the upper side of the lower lip. In such case, said second portion of the contour of the coupling part having the groove, both in the floor panels of the first series and in the floor panels of the second series, preferably comprises at least these vertically active locking surfaces. Preferably, these vertically active locking surfaces are made flat, for example, horizontal or with a limited inclination of, for example, two to five degrees. It is noted that the vertically active locking surface at the upper side of the lower lip can be formed by said flat flank portion of the lower lip, of which, as aforementioned, preferably the prolongation adjoins to the prolongation of said rising flank portion of the recess.

For obtaining an optimization of the coupling part having the groove in function of the thickness of the floor panels, said two portions of the contour, in floor panels of a first series that are thinner than floor panels of a second series, preferably are composed such that the floor panels in the first series also differ from the floor panels in the second series in that said contour of the coupling part having the groove shows one or more of the following features:
- that said lower lip in the floor panels of the first series is formed such that it extends over a smaller distance beyond said upper lip of the groove than this is the case in the floor panels of the second series;
- that said recess in the floor panels of the first series in respect to the floor panel is formed more proximally than this is the case in the floor panels of the second series;
- that said recess in the floor panels of the first series is formed with a deepest point, which, in respect to the floor panel, is situated more proximally than this is the case in the floor panels of the second series;
- that the lower lip in the floor panels of the first series is formed with a thinnest cross-section that is thinner than this is the case in the floor panels of the second series.

Said optimization may result, for example, in a greater strength of the coupling and/or a smoother engagement of the coupling parts, either by means of a substantially horizontal shifting movement of two of such floor panels of the same series towards each other, or by means of a turning movement around the upper edge of such floor panels. When improving the engagement of such coupling parts, the flexibility of the lower lip may play an important part. However, this lip may not be excessively weakened in order to obtain such flexibility, as then the strength of the contour may be compromised. An optimized contour preferably has to attempt a compromise between said flexibility of the lower lip and the strength of the connection for each series of floor panels.

The method may, for example, be applied for manufacturing series of floor panels differing at least in that the floor panels in the different series have a different thickness, wherein this different thicknesses are chosen from a range of 9 to 16, and still better from 10 to 12 millimeters. These thicknesses may also be chosen from a range from 6 to 10, and still better from 7 to 9.5 millimeters. Of course, also thicker floor panels may be manufactured by the method according to the invention, such as floor panels with a thickness between 16 and 25 millimeters.

According to an important embodiment, the method of the invention allows that the contour of the coupling part having the groove in both series of floor panels is formed by means of a machining treatment by means of at least two rotating milling tools. Preferably, said two tools consist, at the one hand, of a first milling tool forming at least said first portion of said contour, and, on the other hand, a second milling tool forming at least said second portion of said contour. Said milling tools may have a diameter which is five times larger than the thickness of the floor panels of the first and/or the second series. This diameter may be even larger than twenty times this thickness.

As said portions of the contour are made identical in both series of floor panels, the method of the invention, according to said important embodiment, furthermore allows that said two tools that are applied for the first series of floor panels are made identical to said two tools applied for the second series of floor panels. Still better, for said two milling tools the same milling tools are used for the first series and the second series of floor panels.

It is noted that the invention preferably makes use of a set of tools consisting at least of two milling tools, which are applied as the first and the second milling tool in a method according to the important embodiment described herein above.

Further, it is noted that instead of in combination with forming the coupling part having the groove, the method may also comprise the step of forming the coupling part having the tongue at the opposite side of the floor panel, wherein the contour of this coupling part also is composed at least of two portions, namely a first portion extending at least from said locking surface of the projection at the underside of the tongue up to a rising flank portion of this projection, and a second portion extending at least from the upper side up to the underside of the tongue. In such case, the particularity of the method of the invention consists in that said two portions of the coupling part having the tongue in series of floor panels of different thickness as such are made identical and that at least said first portion of that contour in said second series of floor panels is realized at a relative position in respect to the upper edge of the floor panel, which, in respect to its position in said first series of floor panels, is at least laterally shifted. To the person skilled in the art, it is clear that such method may have preferred embodiments analogous to the preferred embodiments described herein above by means of the step of forming the coupling part having the groove.

In the first place, the invention is intended for application with wood-based or wooden floor panels, such as may be the case with the floor panels of a laminate parquet, a prefabricated parquet, a veneer parquet, or a solid parquet.

In laminate parquet, usually floor panels are applied of which the top layer is composed of one or more carrier sheets soaked in resin. Such laminate floor panels mostly comprise a one-piece substrate, for example, of MDF or HDF (Medium Density Fiberboard or High Density Fiberboard) and a printed decor determining the appearance at the upper side. As known, laminate floor panels may be manufactured in various manners. According to a first possibility, they may be manufactured by a DPL (Direct Pressure Laminate) technique, wherein said carrier sheets, together with the substrate, are brought into a press, where they are consolidated under the influence of high pressure and temperature. According to a second possibility, they may be manufactured by a HPL (High Pressure Laminate) technique, wherein said carrier sheets first are consolidated to a so-called compact laminate, which subsequently is glued onto the substrate. At the underside of laminate floor panels, usually a so-called backing layer or balancing layer is applied, which preferably also is composed of at least one carrier sheet soaked in resin, in other words, a resin-treated carrier sheet.

In prefabricated parquet, the floor panels have a top layer on the basis of real wood, usually thicker than veneer, which top layer then, for example, has a thickness of 2 to 5 millimeters and is provided on a wooden or wood-based, single- or multi-part substrate.

It is noted that the method preferably is applied for series of floor panels in which the floor panels of the series with the larger thickness have a thickness being at least 10% larger than the thickness of the floor panels of the series with the smaller thickness. From such difference it is in fact useful to work with differently-positioned portions of the contour of the coupling parts.

Further characteristics will become clear from the following detailed description and the appended claims. With the intention of better showing the characteristics of the invention, hereafter, as an example without any limitative character, thus several preferred embodiments are described, with reference to the accompanying drawings, wherein:
Figure 1 represents a floor panel obtained with a method according to the invention;
Figure 2 represents two of such floor panels of a different series in a cross-section according to the line II-II indicated in figure 1;
Figures 3 and 4, in cross-section, show how the floor panels of figure 2 can be coupled at their edges;
Figures 5 to 8 illustrate several steps of a method according to the invention;
Figure 9 shows a particular variant of the invention in a view similar to that of figure 5;
Figure 10, at a larger scale, represents a view onto the area indicated as F10 in figure 9.

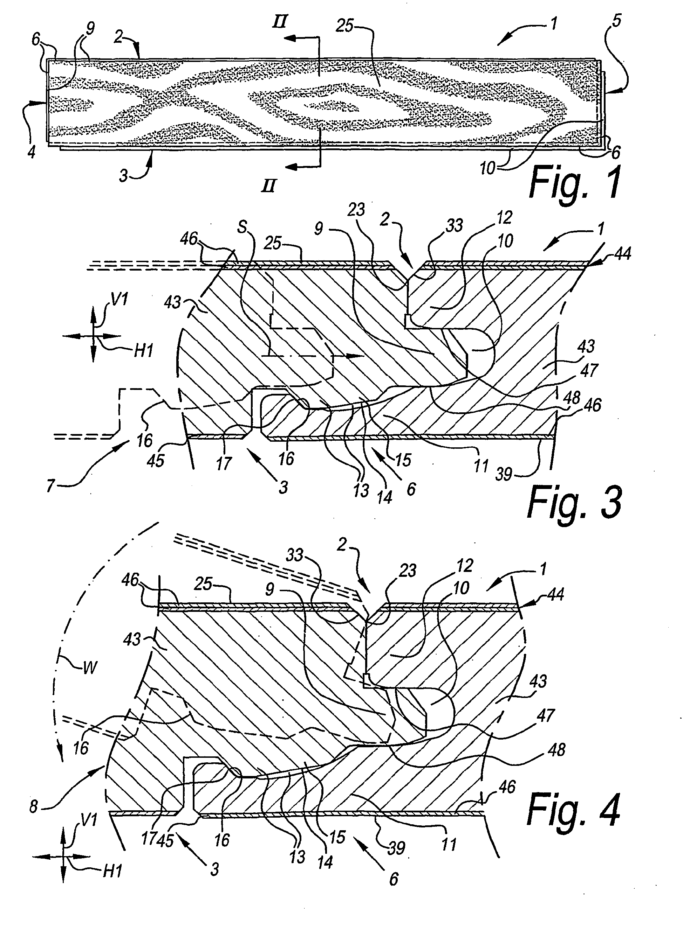

Figure 1 shows a floor panel 1, which can be obtained by a method according to the invention. This relates to a floor panel 1, which at least at two, and in this case at all, opposite sides 2-3, 4-5, has coupling parts 6 allowing that two of such floor panels 1 can be connected to each other at their edges.

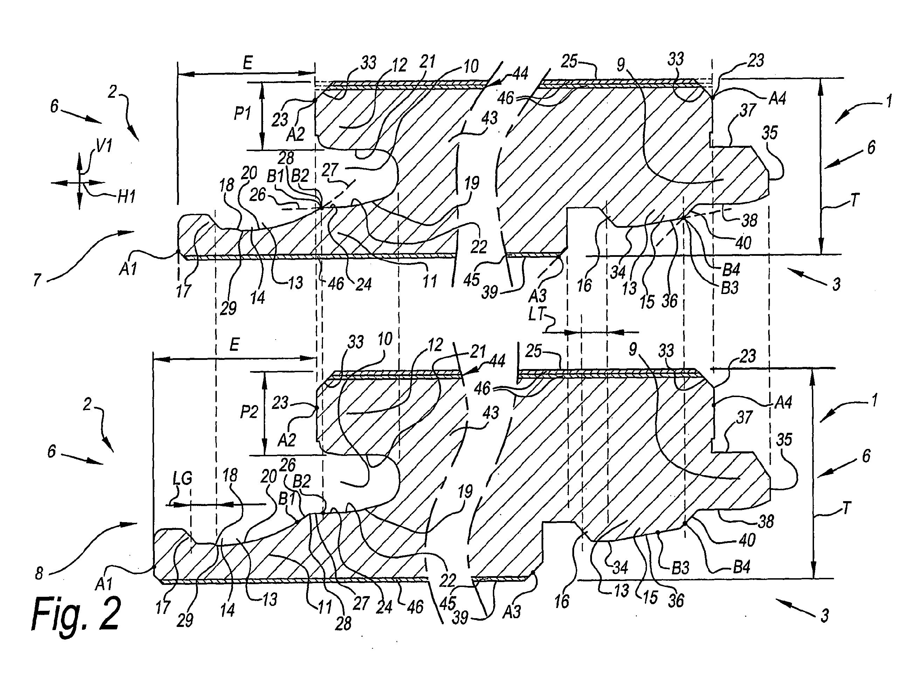

Figure 2 shows from two different series 7-8 each time one floor panel 1, wherein for manufacturing the floor panels 1 of these two series 7-8, a method according to the invention is applied.

According to the invention, the floor panels 1 in the first series 7 differ from the floor panels 1 in the second series 8 at least in that they have another thickness T. According to the example, the floor panels 1 of the first series 7 are thinner than the floor panels 1 of the second series 8. It is clear that the series 7-8 intended according to the invention comprise more than one floor panel 1 of a certain thickness T, such that a floor covering can be composed of the floor panels 1 of such a series 7-8.

As figure 2 clearly shows, the coupling parts 6 of these two floor panels 1 comprise a tongue 9 and a groove 10, which is bordered by means of a lower lip 11 and an upper lip 12. Herein, the lower lip 11 extends over a distance E up to beyond the upper lip 12. When the tongue 9 and the groove 10 cooperate with each other, they effect the locking in the vertical direction V1. Further, the coupling parts 6 are provided with locking portions 13, which can effect a locking the in horizontal direction H1. In the present case, these locking portions 13 consist of a recess 14 in the lower lip 11 and a projection 15 at the underside of the tongue 9, wherein this projection 15 can cooperate having said recess 14, when two floor panels 1 of the same series 7-8 cooperate with each other.

As figures 3 and 4 show, in such cooperation at least horizontally active locking surfaces 16-17 are created. These locking surfaces provide for that the respective floor panels 1 can not, or only in a limited manner, shift apart from each other in horizontal direction H1. The locking surface 17 that is formed on the flanks of the recess 14 is situated at least partially, and in this case entirely, in a portion of the lower lip 11 extending beyond the upper lip 12. Preferably, the method is applied for manufacturing floor panels with coupling parts allowing that two of such floor panels of the same series can be coupled to each other without play in horizontal direction, and still better without play in each direction of the plane perpendicular to the respective sides.

The method of the present invention comprises at least the step of forming the coupling part 6 having said groove 10, wherein the contour of this coupling part 10, as represented, amongst others, in the floor panels 1 of figure 2, is composed at least of two portions 18-19, and wherein these two portions 18-19 with floor panels 1 of series 7-8 with different thicknesses T are realized identical. In the examples of figure 2, the first portion 7 of the contour extends at least from the horizontally active locking surface 17 on the flanks of the recess 14 in the lower lip 11 up to a rising flank portion 20 of this recess 11. The second portion 19 extends at least from the underside 21 of the lower lip 12 up to the upper side 22 of the lower lip 11. More particularly, the first portion 18 of the contour in the represented floor panels 1 extends from the point A1 at the distal extremity of the lower lip 11 to the point B1 on said rising flank portion 20 of the recess 14, whereas the second portion 19 extends from the point A2 below the upper edge 23, where the floor panels 1 adjoin each other, up to the point B2 on a flank portion 24 of the lower lip 11, which, globally viewed, has a smaller angle of inclination than the steepest portion of said rising flank portion 20 of the recess 14. In this case, the respective flank portion 24 of the lower lip 11 is realized flat.

In the floor panel 1 of said second series 8, said first portion 18 of the contour is realized at a relative position in respect to the upper edge 23, which, in respect to its position in the floor panel 1 of said first series 7, is shifted at least laterally, in this case over a distance LG.

Moreover, said second portion 19 of the contour of the coupling part 6 having the groove 10 in said second series 8 of floor panels 1, is realized in a relative position, namely at a distance P2 in respect to the upper side 25 of the floor panel, which, in respect to its position in said first series 7 of floor panels 1, namely at a distance P1 in respect to the upper side 25, is shifted at least in a direction transverse to the panel surface.

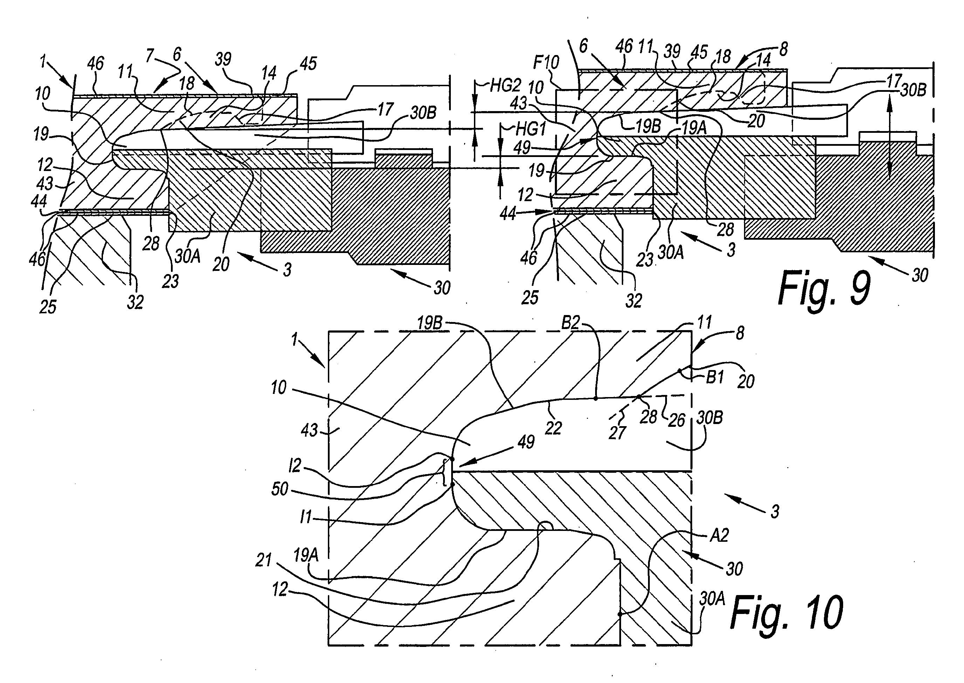

It is noted that in the examples represented here, the portions 18-19 of the contour extend, each separately, in a continuous and/or uninterrupted manner. However, it is not excluded that, in one or several of said series 7-8, they are locally interrupted, but that the aforementioned two series 18-19 of the contour still extend in a globally identical manner in both series 7-8 of floor panels 1. According to a first example, such local interruption of one or both of said portions 18-19 of the contour may consist at least of an additional cutout formed in the respective portion 18-19 of the contour, whereby a portion of the actual contour portion 18-19 is removed, such as a cutout performed on this contour portion 18-19 by means of a saw or other cutting tool. According to a second example, such local interruption may consist at least of an additional contour portion, by means of which two parts of one and the same respective contour portion 18-19 in the one series 8 is mutually shifted in respect to the other series 7. Preferably, this relates to maximum one such interruption per contour portion 18-19, or the respective contour portion 18-19 preferably is divided into maximum two parts only. For a detailed description of an embodiment according to this second example, reference is made to figures 9 and 10.

The floor panels 1 of the first series 7 and second series 8 further have the following particular features:
- the prolongation 26 of said flat flank portion 24 of the lower lip 11, which forms part of said second portion 19 of the contour, adjoins to the prolongation 27 of said rising flank portion 20 of the recess 14 forming part of said first portion 18 of the contour;
- at the height of the above-mentioned adjoining location 28, both the floor panel 1 of the first series 7 as well as the floor panel 1 of the second series 8 have a discontinuous angle of inclination;
- in the floor panels 1 of the first series 7, said lower lip 11 is formed such that it extends over a smaller distance E beyond said upper lip 12 of the groove 10 than this is the case in the floor panels 1 of the second series 8;
- in the floor panels 1 of the first series 7, said recess 14 is formed more proximal in respect to the floor panel 1 than this is the case in the floor panels 1 of the second series 8;
- in the floor panels 1 of the first series 7, said recess 14 is formed with a deepest zone or point 29 which, in respect to the floor panel 1, is situated more proximally than this is the case in the floor panels 1 of the second series 8;
- in the floor panels 1 of the first series 7, said lower lip 11 is formed with a thinnest cross-section, namely in this case at the height of the deepest point 29, which is thinner than this is the case in the floor panels 1 of the second series 8.

These features, each separately or in combination, as it is the case here, provide for an, according to the thickness T of the floor panel 1, optimized contour of the coupling part 6 having the groove 10, such that adjoining two floor panels 1 of the same series by means of a horizontal shifting movement S towards each other and/or by means of a turning movement around the upper edges 23 thereof can take place in a smooth manner. It is noted that coupling parts 6 represented in figures 3 and 4 allow engaging two floor panels 1 from the same series 7-8 both by a shifting movement S and by a turning movement W.

In the examples of figures 3 and 4, the lower lip 11, after adjoining the floor panels 1 of both series 7-8, remains in a bent-out position, wherein, due to its elastic resiliency, it forces the floor panels 1 towards each other. Such forcing of floor panels 1 towards each other by means of elastic bending of the lower lip 11 is known as such from WO 97/47834 and in the meantime is known to the skilled person as pretension. It is noted that the examples also show the particular form of pretension as it is described in WO 2006/032398 and which results in a reduced risk of the occurrence of creaking noises when walking on a floor covering composed of such floor panels 1.

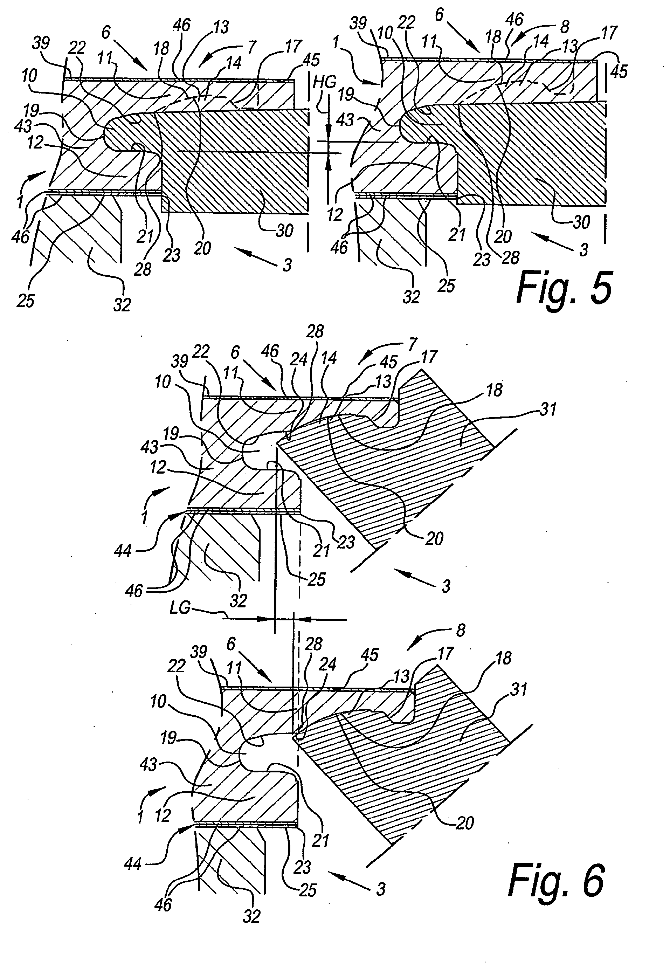

Figures 5 and 6 represent how the contour of the coupling part 6 having the groove 10 can be formed in both series 7-8 of floor panels 1 by means of a machining treatment by means of at least two milling tools 30-31. Herein, the milling tools 30-31 applied for the first series 7 are made identical to the milling tools 30-31 applied for the second series 8. Preferably, this relates to one and the same set of milling tools 30-31 comprising at least two milling tools 30-31, namely, on the one hand, a milling tool 30 forming in both series 7-8 of floor panels 1 at least the second portion 19 of the contour of the groove 10, as represented in figure 5, and, on the other hand, a milling tool 31, which, in both series 7-8 of floor panels 1, forms at least the first series 18 of the contour of the groove 10, as represented in figure 6.

Further, it is evident from figures 5 and 6 that said first portion 18 of the contour by means of said milling tool 31 is formed in said second series 8 of floor panels 1 at a position in respect to the upper edge 23, which, in respect to its position in said first series 7 of floor panels 1, is shifted laterally over a distance LG, and that said second portion 19 of the contour in said second series 8 of floor panels 1 is formed at a position in respect to the upper side 25, which, in respect to its position in said first series 7 of floor panels 1, is shifted in transverse direction over a distance HG.

It is noted that preferably, for performing the milling treatments, the floor panels 1 are pressed with their upper side 25 onto a sliding block or other guiding element 32, such that all distances, for example, the distances P1 and P2, are referenced towards this upper side 25. Further, it is noted that it is not excluded that still other milling treatments are performed before the final shape of the respective side 2-3-4-5 is obtained. Thus, for example, in a previous treatment step a portion of surplus material may be removed and/or the final upper edge 23 may be finished in a fine-treatment step. A particular example of such finishing relates to removing a material portion in order to form a chamfer 33, such as the bevels represented in figure 2. However, it is clear that such chamfer 33 must be seen as optional only and that such floor panels 1 also may be manufactured with straight upper edges 23 adjoining each other. Further, it is noted that such chamfers are known as such, for example, from WO 01/96688.

As mentioned in the introduction, the contour of the coupling part 6 having the tongue 9 may be composed in a similar manner to the contour of the coupling part 6 having the groove 10, independently of the fact whether the groove 10 is composed of two portions 18-19. Such method is also applied for manufacturing the floor panels represented in figure 2 and comprises the step of forming the coupling part 6 having the tongue 9 at the opposite side 2 of the floor panel 1, wherein the contour of this coupling part 6 is also composed of at least two portions 34-35. In the example, this relates to a first portion 34 extending at least from said locking surface 16 of the projection 15 at the underside of the tongue 9 up to a rising flank portion 36 of this projection 15, and to a second portion 35 extending at least from the upper side 37 up to the underside 38 of the tongue 9. More particularly, in the represented floor panels 1 the first portion 37 of the contour extends from the point A3 at the underside 39 of the floor panel 1 up to the point B3 on said rising flank portion 36 of the protrusion 15, whereas the second portion 35 extends from the point A4 below the upper edge 23, where the floor panels 1 adjoin each other, up to the point B4 on another, preferably more steeply rising, flank portion 40 of the protrusion 15.

In such case, the particularity of the method of the invention consists in that said two portions 34-35 of the coupling part 6 having the tongue 9, in series 7-8 of floor panels 1 of different thickness T, as such are made identical, and that at least said first portion 34 of that contour in said second series 8 of floor panels 1 is realized on a relative position in respect to the upper edge 23, which, in respect to its position in the floor panel 1 from said first series 7, is shifted at least laterally, in this case, over a distance LT.

Preferably, also the second portion 35 of the contour of the coupling part 6 having the tongue 10 in said second series 8 of floor panels 1 is realized at a relative position, namely, at a distance P2 in respect to the upper side 25 of the floor panel, which, in respect to its position in said first series 7 of floor panels 1, namely, at a distance P1 in respect to the upper side 25, is shifted at least in a direction transverse to the panel surface.

To the person skilled in the art, it is obvious that such method can have preferred embodiments analogous to the preferred embodiments described above by means of the step of forming the coupling part 6 having the groove 10.

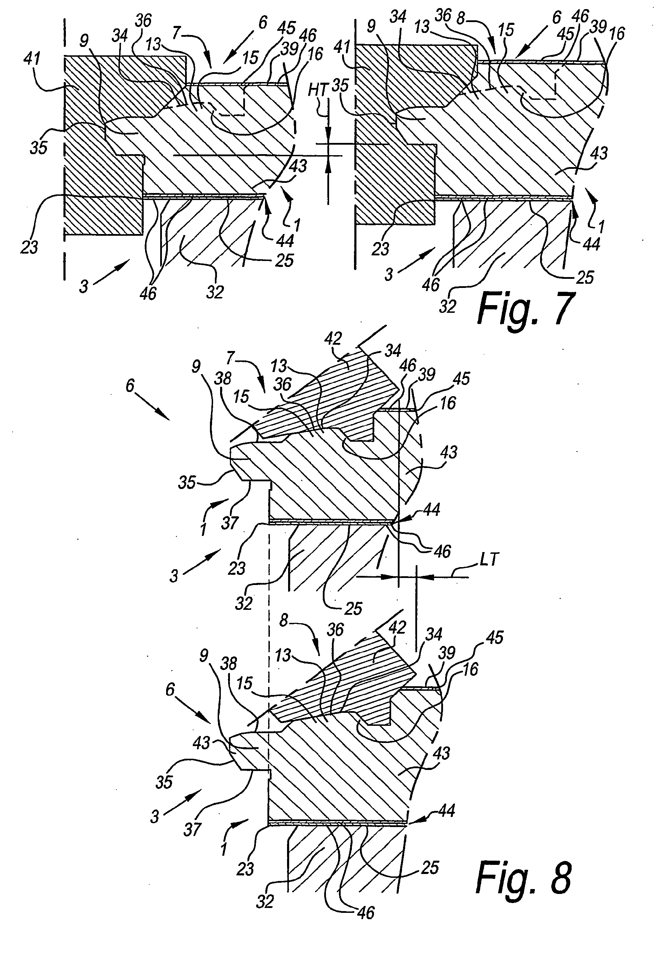

For clearness' sake, reference is made to figures 7 and 8, which represent how the contour of the coupling part 6 having the tongue 9 can be formed by means of at least two milling tools 41-42, namely, on the one hand, a milling tool 41 forming in both series 7-8 of floor panels 1 at least the second portion 35 of the contour of the tongue 9, as represented in figure 7, and, on the other hand, a milling tool 42 forming in both series 7-8 of floor panels 1 at least the first portion 34 of the contour of the tongue 9, as represented in figure 8.

Figures 7 and 8 clearly show that in the respective floor panels the first portion 34 of the contour in the first series 7 is realized at a relative position in respect to the upper edge 23, which, in respect to its position in the second series 8 of floor panels 1, is laterally shifted over a distance LT, whereas the second portion is shifted relatively in respect to the upper side 25 of the floor panel in transverse direction over a distance HT.

It is evident that the invention also relates to a set of milling tools allowing to manufacture a floor panel according to the method represented in figures 7 and 8, and that the invention also relates to a floor panel obtained by means of such method.

It is noted that the floor panels 1 represented in the figures relate to laminate floor panels with a substrate 43 on the basis of wood-based material, such as MDF or HDF, which is provided with a top layer 44 and a backing layer 45. In this case, the top layer 44 comprises two carrier sheets 46 soaked in resin or provided with resin, and the backing layer 45 comprises one such carrier sheet 46 provided with resin. As noted in the introduction, the method of the invention of course may also be applied for manufacturing other floor panels 1.

Further, it is noted that, according to a preferred embodiment of the invention, which, for example, is illustrated in a clear manner by means of figure 3 and 4, said tongue 9 and groove 10, both when the two floor panels 1 of the first series 7 and when the two floor panels 1 of the second series 8 cooperate with each other, also show vertically active locking surfaces 47-48 at the underside 21 of the upper lip 12 and at the upper side 22 of the lower lip 11, and that said second portion 19 of the contour of the coupling part 6 having the groove 10, both in the floor panels 1 of the first series 7 as in the floor panels 1 of the second series 8, comprises at least these vertically active locking surfaces 47-48.

It is clear that also the contour of the coupling part 6 having the groove 10 and/or the coupling part 6 having the tongue 9 at the second pair of opposite sides 4-5 can be composed in a similar manner of two portions 18-19 and/or 34-35, as described herein above by means of the first pair of opposite sides 2-3.

Figure 9 shows another particular variant of the present invention, wherein in particular said second portion of the contour 19 in the second series 8 shows a local interruption 49, however, wherein said two portions 18-19 of the contour are extending globally identical in both series 7-8 of floor panels 1.

Figure 10 clearly shows that the here employed local interruption 49 consists of an additional contour portion 50, by means of which a first part 19A and second part 19B of the second contour portion 19 in the second series 8 of floor panels 1 are mutually shifted compared to their mutual position in the first series 7. Herein, said first part 19A of the second contour portion 19 extends from the point A2 to an intermediary point I1, and said second part 19B of this contour portion 19 extends from the intermediary point I2 to the point B2. While the points I1 and I2 of the first and second part 19A-19B adjoin to each other in the first series 7 of floor panels 1, they are, in the second series 8 of floor panels 1, removed from each other in that these points I1 and I2 are connected to each other by the additional contour portion 50.

It is clear that the local interruption 49, as represented in the second series 8 in figures 9 and 10, forms an illustration of the above-mentioned second example of local interruption. Such interruption 50 may be useful, when it is desirable, for example, to optimize the thickness of the tongue 9 according to the thickness T of the floor panel 1. Preferably, for series 8 of floor panels 1 with a larger thickness T also a thicker tongue 9 and a, preferably substantially corresponding, wider groove 10 is applied.

As represented in figure 9, such local interruption 50 may be realized by means of milling tools 30, which are composed of at least two cutting portions 30A-30B, the mutual position of which can be varied. Such composed milling tools are known as such. In the example, a first cutting portion 30A of such composed cutting tool 30 is applied for realizing said first part 19A of the second contour portion 19, whereas a second cutting portion 30A is applied for realizing said second portion 19B. This allows that the first part 19A of the second portion 19 of the contour in said second series 8 of floor panels 1 is formed at a position in respect to the upper side 25, which, in respect to its position in said first series 7 of floor panels 1, is shifted in transverse direction over a distance HG1, whereas the position of said second portion 19B in respect to the upper side 25 of the floor panels 1, when the first series 7 is compared to the second series 8, is shifted over a different distance HG2. It is evident that such embodiment also can be realized when said cutting portions 30A-30B form part of different milling tools 30, or in other words are not composed to the same composed milling tool 30. In such case, of course, the mutual position of the cutting portions 30A-30B must be varied in another manner, for example, by adjusting at least the mutual position of the different milling tools 30 and/or at least by altering the position of a cutting portion 30A-30B in respect to the milling tool 30 upon which it is mounted.

In respect to additional contour portions 50, it is noted that they preferably extend horizontally, this is as a substantially straight flank between the two parts 19A-19B of the respective locally interrupted portion 19 of the contour. Still better, this straight line is substantially parallel to the axis of rotation of at least one, and preferably of both said cutting parts 30A-30B, which are used for forming the respective parts 19A-19B of the respective contour portion 19.

It is clear that such local interruptions 49, whether or not corresponding, for example, in the form of additional contour portions 50, may also or solely be applied at the tongue side 2-4 of the floor panels 1, and that they also may be applied in respect to the first portion 18 of the contour. Further, it is clear that such additional contour portions 50 allow additional optimization possibilities for the design of the coupling means 6, according to the thickness T of the respective series 7-8 of floor panels 1.

Thus, it is clear that the invention also relates to a method for manufacturing floor panels, wherein, instead of working with identical first and second contour portions 18-19, first and/or.second contour portions 18-19 are used, which in the first series 7 and/or in the second series 8 show a local interruption 49, however, wherein these first and second portions 18-19 of the contour still extend in a globally identical manner.

In the above, by "local interruption 49" is meant that this interruption 49, for example, a cutout or an additional contour portion 50, extends only over a limited distance in the respective portion 18-19 of the contour, between the parts 19A-19B of the respective portion 18-19 of the contour, respectively. This limited distance preferably is less than 20% of the overall length of the respective contour portion 18-19 or the parts 19A-19B thereof. Still better, it is less than 10, or even less than 5% of the overall length of the respective contour portion 18-19.

The present invention is in no way limited to the forms of embodiment described by way of example and represented in the figures, on the contrary may such methods, sets of tools and floor panels be realized according to various variants, without leaving the scope of the claims.

## Claims

1. Method for manufacturing floor panels, of the type having coupling parts (6) at least at two opposite sides (2-3), which coupling parts (6), when two of such floor panels (1) cooperate with each other, effect a locking in vertical direction (V1), perpendicularly to the plane of the floor panels (1), as well as a locking in horizontal direction (H1), perpendicularly to the respective sides (2-3) and in the plane of the floor panels (1), wherein the locking in vertical direction (V1) is realized by means of a tongue and groove connection (9-10), wherein this groove (10) is bordered by a lower lip (11) and an upper lip (12), and wherein the coupling parts (6), for performing the locking in horizontal direction (H1), are provided with locking portions (13) in the form of a recess (14) in said lower lip (11) and a cooperating-therewith projection (15) at the underside of the tongue (9), which, when two of such floor panels (1) cooperate, form at least horizontally active locking surfaces (16-17), wherein the locking surface (17) formed on the flanks of said recess (14) is situated at least partially in a portion of the lower lip (11) that extends beyond the upper lip (12), wherein the method comprises at least the step of forming the coupling part (6) having said groove (10), wherein the contour of this coupling part (6) is composed at least of two portions (18-19), namely a first portion (18) extending at least from said locking surface (17) of the recess (14) up to a rising flank portion (20) of the recess (14), and a second portion (19) extending at least from the underside (21) of said upper lip (12) up to the upper side (22) of said lower lip (11), **characterized in that** the method is applied for manufacturing at least two series (7-8) of floor panels (1), wherein the floor panels (1) in a first series (7) differ from the floor panels (1) in a second series (8) at least **in that** they have a different thickness (T); that said two portions (18-19) of the contour of the coupling part (6) having said groove (10) as such is made identical in both series (7-8) of floor panels (1); and that at least said first portion (18) of the contour in said second series (8) of floor panels (1) is realized at a relative position in respect to the upper edge (23) of the floor panel (1) which is at least laterally shifted in respect to its position in said first series (7) of floor panels (1).

2. Method according to claim 1, **characterized in that** said second portion (19) of the contour of the coupling part (6) having said groove (10) in said second series (8) of floor panels (1) is realized at a relative position in respect to the upper side (25) of the floor panel (1), which, in respect to its position in said first series (7) of floor panels (1) is shifted at least in a direction transverse to the panel surface.

3. Method according to claim 1 or 2, **characterized in that** the first portion (18) of said contour and/or the second portion (19) of which the contour of the coupling part (6) having said groove (10) is composed, extend, each in its turn, uninterruptedly or continuously both in the floor panels (1) of the first series (7) as well as in the floor panels (1) of the second series (8).

4. Method according to any of the preceding claims, **characterized in that** said second portion (19) extends at least up to a flank portion (24) at the upper side (22) of the lower lip (11), wherein this flank portion (24), globally viewed, extends at a smaller angle of inclination than the angle of inclination of the steepest portion of said rising flank portion (20) of the recess (14), wherein preferably the prolongation (26) of the first-mentioned flank portion (24) adjoins to the prolongation of said rising flank portion (20) of the recess (14) forming part of said first portion (18) of the contour.

5. Method according to claim 4, **characterized in that** said contour, at the height of said adjoining (28), both in the floor panels (1) of the first series (7) as well as in the floor panels (1) of the second series (8), shows an abrupt change in the angle of inclination.

6. Method according to any of the preceding claims, **characterized in that** the aforementioned tongue (9) and groove (10), both when two floor panels (1) of the first series (7) and when two floor panels (1) of the second series (8) cooperate with each other, have at least vertically active locking surfaces (47-48) at the underside (21) of the upper lip (12) and at the upper side (22) of the lower lip (11), and that said second portion (19) of the contour, both in the floor panels (1) of the first series (7) and in the floor panels (1) of the second series (8), comprises at least these vertically active locking surfaces (47-48).

7. Method according to any of the preceding claims, **characterized in that** the floor panels (1) of the first series (7) are thinner than the floor panels (1) of the second series (8) and that the aforementioned two portions (18-19) are composed such that the floor panels (1) in a first series (7) also differ from the floor panels (1) in a second series (8) **in that** said contour of the coupling part (6) having the groove (10) shows one or more of the following features:
- that said first portion (18) of the contour also comprises the distal extremity of said lower lip (11) ;
- that said second portion (19) of the contour comprises at least the entire underside (21) of the upper lip (12);
- that said lower lip (11) in the floor panels (1) of the first series (7) is formed such that it extends over a smaller distance (E) beyond said upper lip (12) of the groove (10) than this is the case in the floor panels (1) of the second series (8);
- that said recess (14) in the floor panels (1) of the first series (7) in respect to the floor panel (1) is formed more proximally than this is the case in the floor panels (1) of the second series (8);
- that said recess (14) in the floor panels (1) of the first series (7) is formed with a deepest point (29) which, in respect to the floor panel (1), is situated more proximally than this is the case in the floor panels (1) of the second series (8);
- that the lower lip (11) in the floor panels (1) of the first series (7) is formed with a thinnest cross-section that is thinner than this is the case in the floor panels (1) of the second series (8).

8. Method according to any of the preceding claims, **characterized in that** it is applied for manufacturing series (7-8) of floor panels (1) differing at least **in that** the floor panels (1) in the different series (7-8) have a different thickness (T) and these different thicknesses (T) are chosen from a range from 9 to 16, and still better from 10 to 12 millimeters.

9. Method according to any of the claims 1 to 9, **characterized in that** it is applied for manufacturing series (7-8) of floor panels (1) differing at least **in that** the floor panels (1) in the different series (7-8) have a different thickness (T) and these different thicknesses (T) are chosen from a range from 6 to 10, and still better from 7 to 9,5 millimeters.

10. Method according to any of the preceding claims, wherein instead of working with identical first portions (18) and second portions (19) of the contour, first and/or second contour portions (18-19) are used having, in the first series (7) and/or in the second series (8) of floor panels (1), a local interruption (49), however, wherein these first and second contour portions (18-19) still extend in a globally identical manner.

11. Method according to any of the preceding claims, **characterized in that** the contour of the coupling part (6) having the groove (10) in both series (7-8) of floor panels (1) is formed by means of a machining treatment by means of at least two milling tools (30-31) and **in that** said two tools (30-31) consist of, on the one hand, a first milling tool (31) forming at least said first portion (18) of the aforementioned contour, and, on the other hand, a second milling tool (30) forming at least said second portion (19) of the aforementioned contour.

12. Method according to claim 11, **characterized in that** said two tools (30-31) applied for the first series (7) of floor panels (1) are made identical to said two tools (30-31) applied for the second series (8) of floor panels (1).

13. Method according to claim 12, **characterized in that** for the aforementioned two milling tools (30-31) in the first series (7) and the second series (8) of floor panels (1), the same milling tools (30-31) are applied.

14. Method according to any of the claims 11 to 13, **characterized in that** at least one of said two tools (30-31) consists of a composed milling tool with at least two cutting portions (30A-30B), the position of which can be mutually varied.

## Patentansprüche

1. Verfahren zur Herstellung von Fußbodenpaneelen des Typs, der an mindestens zwei gegenüberliegenden Seiten (2-3) Koppelteile (6) aufweist, welche Koppelteile (6), wenn zwei solche Fußbodenpaneele (1) miteinander zusammenwirken, sowohl eine Verriegelung in vertikaler Richtung (V1), senkrecht zur Ebene der Fußbodenpaneele (1), als auch eine Verriegelung in horizontaler Richtung (H1), senkrecht zu den betreffenden Seiten (2-3) und in der Ebene der Fußbodenpaneele (1), bewerkstelligen, wobei die Verriegelung in vertikaler Richtung (V1) mittels einer Nut- und Feder-Verbindung (9-10) verwirklicht wird, wobei diese Nut (10) durch eine untere Lippe (11) und eine obere Lippe (12) begrenzt ist, und wobei die Koppelteile (6) zur Verwirklichung der Verriegelung in horizontaler Richtung (H1) mit Verriegelungsteilen (13) in Form einer Ausnehmung (14) in der besagten unteren Lippe (11) und eines damit zusammenwirkenden Vorsprungs (15) an der Unterseite der Feder (9) versehen sind, welche, wenn zwei solche Fußbodenpaneele (1) zusammenwirken, mindestens horizontal aktive Verriegelungsflächen (16-17) bilden, wobei die an den Flanken der besagten Ausnehmung (14) gebildete Verriegelungsfläche (17) sich mindestens teilweise in einem Teil der unteren Lippe (11) befindet, der sich über die obere Lippe (12) hinaus erstreckt, wobei das Verfahren mindestens den Schritt des Formens des die Nut (10) aufweisenden Koppelteils (6) umfasst, wobei die Kontur dieses Koppelteils (6) mindestens aus zwei Teilen (18-19) zusammengesetzt ist, nämlich einem ersten Teil (18), der sich mindestens ab der besagten Verriegelungsfläche (17) der Ausnehmung (14) bis zu einem ansteigenden Flankenteil (20) der Ausnehmung (14) erstreckt, und einem zweiten Teil (19), der sich mindestens ab der Unterseite (21) der besagten oberen Lippe (12) bis zu der Oberseite (22) der besagten unteren Lippe (11) erstreckt, **dadurch gekennzeichnet, dass** das Verfahren zur Herstellung von mindestens zwei Serien (7-8) von Fußbodenpaneelen (1) angewendet wird, wobei die Fußbodenpaneele (1) in einer ersten Serie (7) sich von den Fußbodenpaneelen (1) in einer zweiten Serie (8) mindestens **dadurch** unterscheiden, dass sie eine unterschiedliche Dicke (T) aufweisen; dass besagte zwei Teile (18-19) der Kontur des die Nut (10) aufweisenden Koppelteils (6) als solches in beiden Serien (7-8) von Fußbodenpaneelen (1) identisch ausgeführt sind; und dass mindestens der besagte erste Teil (18) der Kontur in besagter zweiter Serie (8) von Fußbodenpaneelen (1) in einer relativen Position in Bezug auf die Oberkante (23) des Fußbodenpaneels (1) verwirklicht ist, die in Bezug auf seine Position in der besagten ersten Serie (7) von Fußbodenpaneelen (1) mindestens seitlich verschoben ist.

2. Verfahren nach Anspruch 1, **dadurch gekennzeichnet, dass** besagter zweiter Teil (19) der Kontur des die Nut (10) aufweisenden Koppelteils (6) in besagter zweiter Serie (8) von Fußbodenpaneelen (1) in einer relativen Position in Bezug auf die Oberseite (25) des Fußbodenpaneels (1) verwirklicht ist, die in Bezug auf seine Position in der besagten ersten Serie (7) von Fußbodenpaneelen (1) mindestens in einer Richtung quer zur Paneeloberfläche verschoben ist.

3. Verfahren nach Anspruch 1 oder 2, **dadurch gekennzeichnet, dass** der erste Teil (18) der besagten Kontur und/oder der zweite Teil (19), woraus die Kontur des die Nut (10) aufweisenden Koppelteils (6) zusammengesetzt wird, sich sowohl bei den Fußbodenpaneelen (1) der ersten Serie (7) als auch bei den Fußbodenpaneelen (1) der zweiten Serie (8) jeder an sich ununterbrochen oder kontinuierlich erstrecken.

4. Verfahren nach einem der vorgenannten Ansprüche, **dadurch gekennzeichnet, dass** der besagte zweite Teil (19) sich mindestens bis zu einem Flankenteil (24) an der Oberseite (22) der unteren Lippe (11) erstreckt, wobei sich dieser Flankenteil (24), global gesehen, unter einem kleineren Neigungswinkel erstreckt als der Neigungswinkel des steilsten Teils des vorgenannten ansteigenden Flankenteils (20) der Ausnehmung (14), wobei bevorzugt die Verlängerung (26) des vorgenannten Flankenteils (24) an die Verlängerung des besagten ansteigenden Flankenteils (20) der Ausnehmung (14), die Teil des vorgenannten ersten Teils (18) der Kontur darstellt, anschließt.

5. Verfahren nach Anspruch 4, **dadurch gekennzeichnet, dass** die besagte Kontur in Höhe des Anschlusses (28) sowohl bei den Fußbodenpaneelen (1) der ersten Serie (7) als auch bei den Fußbodenpaneelen (1) der zweiten Serie (8) eine abrupte Änderung des Neigungswinkels zeigt.

6. Verfahren nach einem der vorgenannten Ansprüche, **dadurch gekennzeichnet, dass** die vorgenannte Feder (9) und Nut (10), sowohl wenn zwei Fußbodenpaneele (1) der ersten Serie (7) als auch wenn zwei Fußbodenpaneele (1) der zweiten Serie (8) miteinander zusammenwirken, mindestens vertikal aktive Verriegelungsflächen (47-48) an der Unterseite (21) der oberen Lippe (12) und an der Oberseite (22) der unteren Lippe (11) aufweisen, und dass der besagte zweite Teil (19) der Kontur, sowohl bei den Fußbodenpaneelen (1) der ersten Serie (7) als auch bei den Fußbodenpaneelen (1) der zweiten Serie (8), mindestens diese vertikal aktiven Verriegelungsflächen (47-48) umfasst.

7. Verfahren nach einem der vorgenannten Ansprüche, **dadurch gekennzeichnet, dass** die Fußbodenpaneele (1) der ersten Serie (7) dünner als die Fußbodenpaneele (1) der zweiten Serie (8) sind und dass die vorgenannten zwei Teile (18-19) so zusammengesetzt sind, dass sich die Fußbodenpaneele (1) in einer ersten Serie (7) von den Fußbodenpaneelen (1) in einer zweiten Serie (8) auch **dadurch** unterscheiden, dass besagte Kontur des die Nut (10) aufweisenden Koppelteils (6) eine oder mehrere der folgenden Eigenschaften aufweist:
- dass besagter erster Teil (18) der Kontur auch das distale Ende der besagten unteren Lippe (11) umfasst;
- dass besagter zweiter Teil (19) der Kontur mindestens die gesamte Unterseite (21) der oberen Lippe (12) umfasst;
- dass besagte untere Lippe (11) bei den Fußbodenpaneelen (1) der ersten Serie (7) so ausgebildet ist, dass sie sich über einen kleineren Abstand (E) über besagte obere Lippe (12) der Nut (10) hinaus erstreckt, als dies bei den Fußbodenpaneelen (1) der zweiten Serie (8) der Fall ist;
- dass besagte Ausnehmung (14) bei den Fußbodenpaneelen (1) der ersten Serie (7) in Bezug auf das Fußbodenpaneel (1) proximaler geformt wird, als dies bei den Fußbodenpaneelen (1) der zweiten Serie (8) der Fall ist;
- dass besagte Ausnehmung (14) bei den Fußbodenpaneelen (1) der ersten Serie (7) mit einem tiefsten Punkt (29) geformt wird, der in Bezug auf das Fußbodenpaneel (1) proximaler gelegen ist, als dies bei den Fußbodenpaneelen (1) der zweiten Serie (8) der Fall ist;
- dass die untere Lippe (11) bei den Fußbodenpaneelen (1) der ersten Serie (7) mit einem dünnsten Querschnitt geformt wird, der dünner ist, als dies bei den Fußbodenpaneelen (1) der zweiten Serie (8) der Fall ist.

8. Verfahren nach einem der vorgenannten Ansprüche, **dadurch gekennzeichnet, dass** es zur Herstellung von Serien (7-8) von Fußbodenpaneelen (1) angewendet wird, die sich mindestens **dadurch** unterscheiden, dass die Fußbodenpaneele (1) in den verschiedenen Serien (7-8) eine unterschiedliche Dicke (T) aufweisen und diese unterschiedlichen Dicken (T) aus einem Bereich von 9 bis 16 und noch besser von 10 bis 12 Millimeter ausgewählt sind.

9. Verfahren nach einem der Ansprüche 1 bis 9, **dadurch gekennzeichnet, dass** es zur Herstellung von Serien (7-8) von Fußbodenpaneelen (1) angewendet wird, die sich mindestens **dadurch** unterscheiden, dass die Fußbodenpaneele (1) in den verschiedenen Serien (7-8) eine unterschiedliche Dicke (T) aufweisen und diese unterschiedlichen Dicken (T) aus einem Bereich von 6 bis 10 und noch besser von 7 bis 9,5 Millimeter ausgewählt sind.

10. Verfahren nach einem der vorgenannten Ansprüche, wobei, statt mit identischen ersten Teilen (18) und zweiten Teilen (19) der Kontur zu arbeiten, erste und/oder zweite Konturteile (18-19) verwendet werden, die, in der ersten Serie (7) und/oder in der zweiten Serie (8) von Fußbodenpaneelen (1), eine örtliche Unterbrechung (49) aufweisen, wobei sich jedoch diese ersten und zweiten Konturteile (18-19) noch stets auf eine global identische Weise erstrecken.

11. Verfahren nach einem der vorgenannten Ansprüche, **dadurch gekennzeichnet, dass** die Kontur des die Nut (10) aufweisenden Koppelteils (6) in beiden Serien (7-8) von Fußbodenpaneelen (1) mittels einer spanenden Bearbeitung mittels mindestens zweier Fräswerkzeuge (30-31) geformt wird und dass die besagten zwei Werkzeuge (30-31) bestehen aus, einerseits, einem ersten Fräswerkzeug (31), das mindestens den besagten ersten Teil (18) der vorgenannten Kontur formt, und andererseits einem zweiten Fräswerkzeug (30), das mindestens den besagten zweiten Teil (19) der vorgenannten Kontur formt.

12. Verfahren nach Anspruch 11, **dadurch gekennzeichnet, dass** die besagten, für die erste Serie (7) von Fußbodenpaneelen (1) angewendeten zwei Werkzeuge (30-31) identisch zu den besagten, für die zweite Serie (8) von Fußbodenpaneelen (1) angewendeten zwei Werkzeugen (30, 31) ausgeführt sind.

13. Verfahren nach Anspruch 12, **dadurch gekennzeichnet, dass** für die vorgenannten zwei Fräswerkzeuge (30-31) in der ersten Serie (7) und der zweiten Serie (8) von Fußbodenpaneelen (1) die gleichen Fräswerkzeuge (30-31) angewendet werden.

14. Verfahren nach einem der Ansprüche 11 bis 13, **dadurch gekennzeichnet, dass** mindestens eines der besagten zwei Werkzeuge (30-31) aus einem zusammengesetzten Fräswerkzeug mit mindestens zwei Schneidteilen (30A-30B) besteht, deren Position zueinander variiert werden kann.

## Revendications

1. Procédé pour la fabrication de panneaux de sol, du type possédant des éléments d'accouplement (6) au moins à deux côtés opposés (2-3), lesdits éléments d'accouplement (6), lorsque deux desdits panneaux de sol (1) coopèrent l'un avec l'autre, mettant en oeuvre un verrouillage dans la direction verticale (V1), perpendiculairement au plan des panneaux de sol (1), ainsi qu'un verrouillage dans la direction horizontale (H1), perpendiculairement aux côtés respectifs (2-3) et dans le plan des panneaux de sol (1), le verrouillage dans la direction verticale (V1) étant mis en oeuvre au moyen d'un emboîtement du type à languette et à rainure (9-10), dans lequel cette rainure (10) est délimitée par une lèvre inférieure (11) et par une lèvre supérieure (12), et dans lequel les éléments d'accouplement (6), pour la mise en oeuvre du verrouillage dans la direction horizontale (H1), sont munis de portions de verrouillage (13) sous la forme d'un évidement (14) dans ladite lèvre inférieure (11) et d'une saillie (15) coopérant avec le dernier cité au côté inférieur de la languette (9), qui, lorsque deux desdits panneaux de sol (1) coopèrent, forment des surfaces de verrouillage (16-17) actives au moins en direction horizontale, la surface de verrouillage (17) formée sur les flancs dudit évidement (14) étant située au moins en partie dans une portion de la lèvre inférieure (11) qui s'étend au-delà de la lèvre supérieure (12), le procédé comprenant au moins l'étape de formation de l'élément d'accouplement (6) possédant ladite rainure (10), le contour de cet élément d'accouplement (6) étant composé d'au moins deux portions (18-19), plus précisément d'une première portion (18) s'étendant au moins à partir de ladite surface de verrouillage (17) de l'évidement (14) jusqu'à une portion de flanc montante (20) de l'évidement (14), et d'une deuxième portion (19) s'étendant au moins à partir du côté inférieur (21) de ladite lèvre supérieure (12) jusqu'au côté supérieur (22) de ladite lèvre inférieure (11), **caractérisé en ce que** le procédé est mis en oeuvre pour la fabrication d'au moins deux séries (7-8) de panneaux de sol (1), les panneaux de sol (1) dans la première série (7) différant des panneaux de sol (1) dans la deuxième série (8) au moins par le fait qu'ils possèdent une épaisseur différente (T) ; **en ce que** lesdites deux portions (18-19) du contour de l'élément d'accouplement (6) possédant ladite rainure (10) comme telle sont rendues identiques dans les deux séries (7-8) des panneaux de sol (1) ; et **en ce qu'**au moins ladite première portion (18) du contour dans ladite deuxième série (8) de panneaux de sol (1) est réalisée à une position relative par rapport au bord supérieur (23) du panneau de sol (1) qui est décalée au moins en direction latérale par rapport à sa position dans ladite première série (7) de panneaux de sol (1).

2. Procédé selon la revendication 1, **caractérisé en ce que** ladite deuxième portion (19) du contour de l'élément d'accouplement (6) possédant ladite rainure (10) dans ladite deuxième série (8) de panneaux de sol (1) est réalisée à une position relative par rapport au côté supérieur (25) du panneau de sol (1), qui, par rapport à sa position dans ladite première série (7) de panneaux de sol (1) est décalée au moins en direction transversale par rapport à la surface du panneau.

3. Procédé selon la revendication 1 ou 2, **caractérisé en ce que** la première portion (18) dudit contour et/ou la deuxième portion (19) dont est composé le contour de l'élément d'accouplement (6) possédant ladite rainure (10), s'étendent, chacune à leur tour, de manière ininterrompue ou de manière continue à la fois dans les panneaux de sol (1) de la première série (7) et dans les panneaux de sol (1) de la deuxième série (8).

4. Procédé selon l'une quelconque des revendications précédentes, **caractérisé en ce que** ladite deuxième portion (19) s'étend au moins jusqu'à une portion de flanc (24) du côté supérieur (22) de la lèvre inférieure (11), cette portion de flanc (24), lorsqu'on la regarde globalement, s'étendant en formant un angle d'inclinaison inférieur à l'angle d'inclinaison de la portion la plus raide de ladite portion de flanc montante (20) de l'évidement (14), dans lequel, de préférence, le prolongement (26) de la portion de flanc (24) mentionnée en premier lieu vient se disposer en position adjacente au prolongement de ladite portion de flanc montante (20) de l'évidement (14) faisant partie de ladite première portion (18) du contour.

5. Procédé selon la revendication 4, **caractérisé en ce que** ledit contour, à hauteur de ladite jonction (28), à la fois dans les panneaux de sol (1) de la première série (7) et dans les panneaux de sol (1) de la deuxième série (8), manifeste un brusque changement dans l'angle d'inclinaison.

6. Procédé selon l'une quelconque des revendications précédentes, **caractérisé en ce que** la languette (9) et la rainure (10) susmentionnées, à la fois lorsque deux panneaux de sol (1) de la première série (7) et lorsque deux panneaux de sol (1) de la deuxième série (8) coopèrent les uns avec les autres, possèdent des surfaces de verrouillage (47-48) actives au moins en direction verticale du côté inférieur (21) de la lèvre supérieure (12) et du côté supérieur (22) de la lèvre inférieure (11), et **en ce que** ladite deuxième portion (19) du contour, à la fois dans les panneaux de sol (1) de la première série (7) et dans les panneaux de sol (1) de la deuxième série (8), comprend au moins ces surfaces de verrouillage (47-48) actives en direction verticale.

7. Procédé selon l'une quelconque des revendications précédentes, **caractérisé en ce que** les panneaux de sol (1) de la première série (7) sont plus minces que les panneaux de sol (1) de la deuxième série (8), et **en ce que** la composition des deux portions susmentionnées (18-19) est telle que les panneaux de sol (1) dans la première série (7) diffèrent également des panneaux de sol (1) dans la deuxième série (8) par le fait que ledit contour de l'élément d'accouplement (6) possédant la rainure (10) présente une ou plusieurs des caractéristiques suivantes :
- le fait que ladite première portion (18) du contour comprend également l'extrémité distale de ladite lèvre inférieure (11) ;
- le fait que ladite deuxième portion (19) du contour comprend au moins le côté inférieur entier (21) de la lèvre supérieure (12) ;
- le fait que ladite lèvre inférieure (11) dans les panneaux de sol (1) de la première série (7) est réalisée de telle sorte qu'elle s'étend sur une distance (E) au-delà de ladite lèvre supérieure (12) de la rainure (10) qui est inférieure à la distance en vigueur dans le cas des panneaux de sol (1) de la deuxième série (8) ;
- le fait que ledit évidement (14) dans les panneaux de sol (1) de la première série (7) par rapport aux panneaux de sol (1) est réalisé à une position plus proximale que celle en vigueur dans le cas des panneaux de sol (1) de la deuxième série (8) ;
- le fait que ledit évidement (14) dans les panneaux de sol (1) de la première série (7) est réalisé de telle sorte que son point le plus bas (29), par rapport aux panneaux de sol (1), est disposé à une position plus proximale que celle en vigueur dans le cas des panneaux de sol (1) de la deuxième série (8) ;
- le fait que la lèvre inférieure (11) dans les panneaux de sol (1) de la première série (7) est réalisée de telle sorte que sa section transversale la plus mince est plus mince que celles en vigueur dans le cas des panneaux de sol (1) de la deuxième série (8).

8. Procédé selon l'une quelconque des revendications précédentes, **caractérisé en ce qu'**on l'applique pour la fabrication de séries (7-8) de panneaux de sol (1) qui diffèrent au moins par le fait que les panneaux de sol (1) dans les différentes séries (7-8) possèdent une épaisseur différente (T), ces épaisseurs différentes (T) étant choisies dans la plage de 9 à 16, et mieux encore dans la plage de 10 à 12 mm.

9. Procédé selon l'une quelconque des revendications 1 à 9, **caractérisé en ce qu'**on l'applique pour la fabrication de séries (7-8) de panneaux de sol (1) qui diffèrent au moins par le fait que les panneaux de sol (1) dans les différentes séries (7-8) possèdent une épaisseur différente (T), ces épaisseurs différentes (T) étant choisies dans la plage de 6 à 10, et mieux encore dans la plage de 7 à 9,5 mm.

10. Procédé selon l'une quelconque des revendications précédentes, dans lequel, au lieu de travailler avec des premières portions (18) et des deuxièmes portions (19) du contour qui sont identiques, on utilise des premières et/ou des deuxièmes portions de contour (18-19) qui possèdent, dans la première série (7) et/ou dans la deuxième série (8) des panneaux de sol (1), une interruption locale (49), ces premières et deuxièmes portions de contour (18-19) s'étendant toujours néanmoins d'une manière globalement identique.

11. Procédé selon l'une quelconque des revendications précédentes, **caractérisé en ce que** le contour de l'élément d'accouplement (6) possédant la rainure (10) dans les deux séries (7-8) des panneaux de sol (1) est réalisé via un traitement d'usinage au moyen d'au moins deux outils de fraisage (30-31), et **en ce que** lesdits deux outils (30-31) sont constitués, d'une part, par un premier outil de fraisage (31) formant au moins ladite première portion (18) du contour susmentionné, et d'autre part, par un deuxième outil de fraisage (30) formant au moins ladite deuxième portion (19) du contour susmentionné.

12. Procédé selon la revendication 11, **caractérisé en ce que** lesdits deux outils (30-31) appliqués pour la première série (7) de panneaux de sol (1) sont rendus identiques auxdits deux outils (30-31) appliqués pour la deuxième série (8) de panneaux de sol (1).

13. Procédé selon la revendication 12, **caractérisé en ce que**, pour les deux outils de fraisage susmentionnés (30-31) dans la première série (7) et dans la deuxième série (8) de panneaux de sol (1), on applique les mêmes outils de fraisage (30-31).

14. Procédé selon l'une quelconque des revendications 11 à 13, **caractérisé en ce qu'**au moins un desdits deux outils (30-31) est constitué d'un outil de fraisage composite comprenant au moins deux portions de coupe (30A-30B) dont les positions peuvent faire l'objet d'une variation réciproque.
